# EUROPEAN PATENT SPECIFICATION

(11) **EP 2 847 528 B1**
(45) Date of publication and mention of the grant of the patent: **01.05.2019**
(21) Application number: 13711788.3
(22) Date of filing: 07.03.2013
(51) Int. Cl.: F25D 11/00, F24F 13/04

(54) **SUPPLY AIR DISCHARGE FOR A REFRIGERATED CONTAINER**
LUFTAUSLASSVORRICHTUNG FÜR EINEN KÜHLCONTAINER
DISPOSITIF DE SORTIE D'AIR POUR UN CONTENEUR RÉFRIGÉRÉ

(30) Priority: 10.05.2012 US 201261645199 P
(43) Date of publication of application: 18.03.2015
(73) Proprietor: Carrier Corporation, Farmington, CT 06034 (US)
(72) Inventor: CRESSWELL, Kenneth, Syracuse, New York 13221 (US); CHEN, Yu H., Syracuse, New York 13221 (US)
(74) Representative: Schmitt-Nilson Schraud Waibel Wohlfrom Patentanwälte Partnerschaft mbB
(86) International application number: PCT/US2013/029485
(87) International publication number: WO 2013/169331

(56) References cited:
- DE-T2- 3 785 047
- DE-T2- 69 723 835
- DE-T2- 69 922 039
- DE-U1- 9 308 132
- JP-A- H09 310 954
- US-A- 2 432 587
- US-B1- 6 386 281

## Description

### BACKGROUND OF THE INVENTION

The subject matter disclosed herein relates to refrigeration systems. More specifically, the subject matter disclosed herein relates to refrigeration of containers utilized to store and ship cargo.

A typical refrigerated cargo container, such as those utilized to transport a cargo via sea, rail or road, is a container modified to include a refrigeration unit located at one end of the container. The refrigeration unit includes a compressor, condenser, expansion valve and evaporator coil, all located at the end of the container. A volume of refrigerant circulates throughout the refrigeration unit, and one or more evaporator fans of the refrigeration unit blow a flow of supply air across the evaporator coil cooling the supply air and forcing it out into the container.

The supply air flow in many applications is subject to stringent temperature requirements. For example, it may be necessary to provide supply air in a range of +/-0.25° Celsius. To meet such requirements, the compressor of the refrigeration unit is often a variable speed compressor, and supply air temperature is varied and controlled by changing speed of the compressor. Use of variable speed compressors, however, still often results in supply air temperature fluctuation and temperature undershoot that is unacceptable to customers shipping very temperature sensitive cargo. Alternatively, other compressor modulating schemes are utilized, such as suction modulation or the use of a digital compressor. Variable speed or digital compressors are costly, and relatively inefficient.

DE 697 23 835 T2 discloses a ripening room a ripening room and a central cooler or refrigeration system being placed in the rear of the ripening room behind a wall. The ripening room includes an air distribution ceiling having a "V"-shaped air distributor to encourage uniform air pressure along the tops and sides throughout the entire room, a very precise, smooth temperature setpoint controller, and an air mixing chamber that acts as a "cooling transformer" which provides for an energy-efficient temperature transfer of cooling air from a cooled air circuit of relatively small volume to a larger volume of air that circulates through the interior of the ripening room.

DE 699 22 039 T2 discloses a mobile container adapted for transporting perishable goods includes a front wall, a rear wall, a pair of side walls extending therebetween so as to define an elongated enclosure having a longitudinal axis and adapted to receive a cargo load.

An air recirculation plenum is defined in the enclosure adjacent to the front wall and a refrigeration system is in fluid communication with the air recirculation plenum and is adapted to induct air at a first temperature and to exhaust air at a second temperature.

DE 93 08 132 U1 discloses a refrigerated vehicle with at least two refrigeration chambers, at least one of which is used as a deepfreezing chamber. It is intended to increase the refrigeration power whereby the refrigeration vehicle is equipped with a refrigerated air store from which the refrigerated air can flow as required into the refrigeration chambers which are at different temperatures. For this purpose, the refrigerated air store is provided with outlet openings whose size can be varied by means of controlled flaps. The refrigerated air is drawn off directly from the refrigeration chambers by the refrigeration unit and cooled to a temperature of for example -30°C by means of the vaporiser. From the vaporizer, it passes into the refrigerated air store.

DE 37 85 047 T2 discloses a multi-compartment refrigerated vehicle body which is divided into lanes each independently fed via flap valves from a discharge plenum and exhausted via flap valves to a suction plenum. In each compartment is a thermostat T. Optionally, one or two compartments can have additionally electrically heaters, such as ducted fan heaters. Different temperature requirements can be set for each lane and the relevant thermostat permitted to control that pair of valves feeding to its lane either (normally) cool and or, if required, warm air, from the discharge plenum and exhausting air to the suction plenum.

### BRIEF DESCRIPTION OF THE INVENTION

The invention is defined by a refrigeration system for a refrigerated cargo container of claim 1 and by a method of operating a refrigeration system for a refrigerated cargo container of claim 2.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a refrigerated cargo container;
FIG. 2 is a schematic illustration of a refrigeration system for a container;
FIG. 3 is another schematic illustration of the embodiment of a refrigeration system for a container according to the present invention; and
FIG.4 is a schematic illustration of the embodiment of a refrigeration system for a container according to the present invention.
The detailed description explains embodiments of the invention, together with advantages and features, by way of example with reference to the drawing.

### DETAILED DESCRIPTION OF THE INVENTION

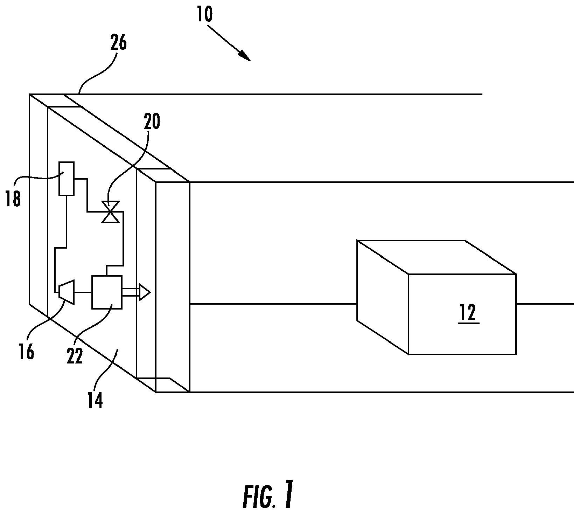

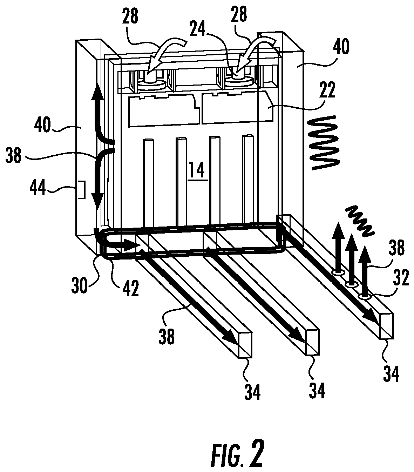

Shown in FIG. 1 is a refrigerated cargo container 10. The cargo container 10 is configured to maintain a cargo 12 located inside the cargo container 10 at a selected temperature through the use of a refrigeration unit 14 located at the container 10. The cargo container 10 is mobile and is utilized to transport the cargo 12 via, for example, a truck, a train or a ship. The refrigeration unit 14 includes a compressor 16, a condenser 18, an expansion valve 20, an evaporator 22 and an evaporator fan 24 (shown in FIG. 2) located at, for example, a first end 26 of the container 10.

Referring to FIG. 2, the refrigeration unit 14 flows return airflow 28 across the evaporator 22 via the evaporator fan 24, thus cooling the airflow 28 to a selected temperature and urges the cooled return airflow, now referred to as supply air 38, through a refrigeration unit outlet 30 into the container 10 via, for example, openings 32 in one or more T-bars 34 extending along a base 36 of the container 10 to cool the cargo 12.

During operation of the refrigeration unit 14, the compressor 16 is cycled "on" and "off' for cost efficient compressor capacity modulation. When the compressor 16 is cycled on/off, however, there may be a high degree of fluctuation in the supply air 38 temperature, since the supply air produced while the compressor 16 is on is of significantly lower temperature than the supply air 38 produced when the compressor 16 is off. To reduce the fluctuation in temperature prior to being urged through the refrigeration unit outlet 30, the supply air 38 is held in a mixing chamber 40 upstream of the outlet 30. The mixing chamber 40 may be located at a lateral side of the refrigeration unit 14 as shown, or alternatively at any other suitable location between the refrigeration unit 14 and an interior of the container 10.

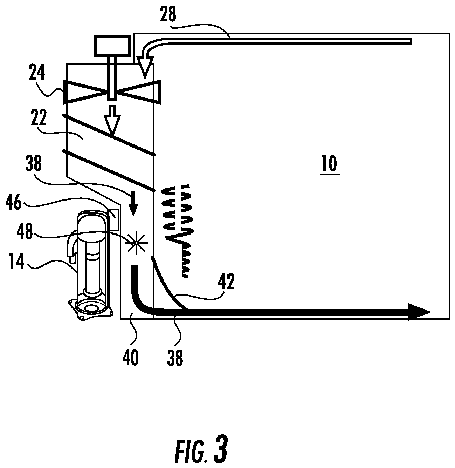

Referring to FIG. 3, the supply air 38 is retained in the mixing chamber 40 by a movable closure 42 positioned across the outlet 30. The supply air 38 is retained in the mixing chamber 40 for a selected duration of time, one complete on/off cycle of the compressor 16, at which point the supply air 38 is mixed to the desired temperature. According to the present invention, one or more temperature sensors 44 (shown in FIG. 2) may be positioned in the mixing chamber 40 to detect a temperature of the supply air 38. The supply air 38 is retained until the selected supply air 38 temperature is detected by the temperature sensors 44. The supply air 38 is released from the mixing chamber 40 by opening the door 42 and flows through the outlet 30 and through the openings 32 in the T-bars 34 and into an interior of the container 10. Operation of the door 42 may be controlled by a control unit 46 linked to the compressor 16 and/or the temperature sensors 44. Further, according to the present invention, a mixing fan 48 is located in the mixing chamber 40 to aid in mixing of the supply air 38 so that a homogeneous mixture of supply air 38 at a selected temperature is reach more quickly.

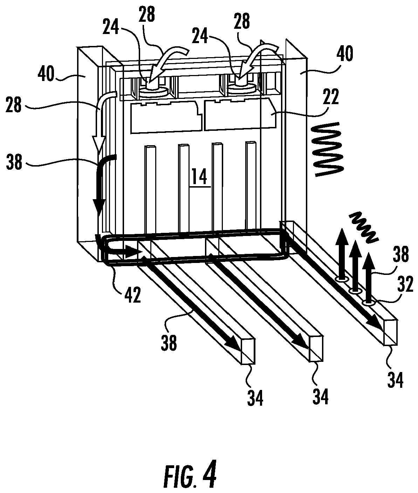

FIG. 4 shows the embodiment according to the present invention wherein a portion of return airflow 28 bypasses the evaporator 22 and is injected into the mixing chamber 40. In the mixing chamber 40, the injected return airflow 28 mixes with supply airflow 38 provided from the refrigeration unit 14 via the evaporator 22. The result of this mixing of return airflow 28 and supply airflow 38 is mixed supply airflow 48 at a desired temperature, which is flowed from the mixing chamber 40 and through the openings 32 in the T-bars 34 and into the interior of the container 10. According to the present invention, the injection of return airflow 28 into the mixing chamber 40 is synchronized with operation of the compressor 16. When the compressor 16 is on, the supply air provided is at a lower temperature than when the compressor 16 is off. Thus, injection of the higher temperature return air 28 is done when the compressor 16 is on to raise the temperature of the supply air 38, and injection of the return air 28 into the mixing chamber 40 is reduced or stopped entirely when the compressor 16 is turned off.

According to the present invention, mixing of the supply air 38 with a flow of return air 28 in the mixing chamber 40 reduces temperature fluctuation of the supply air 38 when it reaches the interior of the container 10. Reduced temperature fluctuation reduces risk to and damage to temperature sensitive cargo 12. Further, the reduction in temperature fluctuation is achieved through flow mixing in the mixing chamber 40, rather than through modulation at, or changing operation of the compressor 16. The compressor 16 in the embodiment described herein is operated only in either an "on" position or an "off' position, without costly and relatively inefficient variable operating speeds or other modulation.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A refrigeration system for a refrigerated cargo container comprising:
a refrigeration unit (14) to provide a flow of supply air (38) for a refrigerated cargo container (10);
a refrigeration system outlet (30) to allow the flow of the supply air (38) into the cargo container (10);
a mixing chamber (40) disposed between the refrigeration unit (14) and the refrigeration system outlet (30) for mixing the flow of supply air (38) and thereby reducing supply air temperature fluctuation at the refrigeration system outlet (30), and
a fan (48) disposed in the mixing chamber (40) to improve mixing of the supply air (38), wherein a flow of return air from the cargo container (10) is directed into the mixing chamber (40) to mix with the supply air (38),
wherein the flow of return air bypasses the refrigeration unit (14), and
wherein the flow of return air is directed into the mixing chamber (40) when a compressor (16) of the refrigeration unit (14) is operating,
**characterized in that**
the flow of return air is not directed into the mixing chamber (40) when the compressor (16) of the refrigeration unit (14) is not operating;
the refrigeration system outlet (30) includes a movable closure (42) to retain the flow of supply air (38) in the mixing chamber (40) to enhance mixing;
the movable closure (42) remains closed for at least one on/off cycle of a compressor (16) of the refrigeration system; and
the refrigeration system further comprises a temperature sensor (44) disposed in the mixing chamber (40).

2. A method of operating a refrigeration system for a refrigerated cargo container (10) comprising:
flowing supply air (38) through a refrigeration unit (14) thereby reducing a temperature of the supply airflow (38);
directing the supply air (38) into a mixing chamber (40);
mixing the supply air (38) in the mixing chamber (40) until a selected supply air (38) temperature is achieved,
enhancing mixing of the supply air (38) in the mixing chamber (40) via a fan (48);
directing the supply air (38) through a refrigeration system outlet (30) and into an interior of a cargo container (10),
directing a flow of return air from the cargo container (10) into the mixing chamber (40); and
mixing the return air and the supply air (38) in the mixing chamber (40),
wherein the flow of return air bypasses the refrigeration unit (14),
directing the flow of return air into the mixing chamber (40) when a compressor (16) of the refrigeration unit (14) is operating,
**characterized in that** the method further comprises the steps of
stopping the flow of return air into the mixing chamber (40) when the compressor (16) of the refrigeration unit (14) is not operating;.
retaining the supply air (38) in the mixing chamber (40) via a movable closure (42) to facilitate mixing of the supply air (38);
wherein the movable closure (42) remains closed for at least one on/off cycle of a compressor (16) of the refrigeration system; and
detecting a supply air (38) temperature in the mixing chamber (40) via a temperature sensor (44).

## Patentansprüche

1. Kühlsystem für einen Kühlfrachtcontainer, umfassend:
eine Kühleinheit (14), um einen Strom von Zuluft (38) für einen Kühlfrachtcontainer (10) breitzustellen;
einen Kühlsystemauslass (30), um den Strom von Zuluft (38) in den Frachtcontainer (10) zu ermöglichen;
eine Mischkammer (40), die zwischen der Kühleinheit (14) und dem Kühlsystemauslass (30) angeordnet ist, zum Mischen des Stroms von Zuluft (38) und dadurch Reduzieren von Zulufttemperaturschwankung an dem Kühlsystemauslass (30), und einen Ventilator (48), der in der Mischkammer (40) angeordnet ist, um das Mischen der Zuluft (38) zu verbessern, wobei ein Strom von Abluft von dem Frachtcontainer (10) in die Mischkammer (40) geleitet wird, um sich mit der Zuluft (38) zu vermischen,
wobei der Strom von Abluft die Kühleinheit (14) umgeht, und wobei der Strom von Abluft in die Mischkammer (40) geleitet wird, wenn ein Verdichter (16) der Kühleinheit (14) betrieben wird,
**dadurch gekennzeichnet, dass**
der Strom von Abluft nicht in die Mischkammer (40) geleitet wird, wenn der Verdichter (16) der Kühleinheit (14) nicht betrieben wird;
der Kühlsystemauslass (30) eine bewegliche Schließeinrichtung (42) beinhaltet, um den Strom von Zuluft (38) in der Mischkammer (40) zu halten, um das Mischen zu verbessern;
die bewegliche Schließeinrichtung (42) für mindestens einen Ein/Aus-Zyklus eines Verdichters (16) des Kühlsystems geschlossen bleibt; und
das Kühlsystem ferner einen Temperatursensor (44) umfasst, der in der Mischkammer (40) angeordnet ist.

2. Verfahren zum Betreiben eines Kühlsystems für einen Kühlfrachtcontainer (10), umfassend:
Strömenlassen von Zuluft (38) durch eine Kühleinheit (14), wodurch eine Temperatur des Stroms von Zuluft (38) reduziert wird;
Leiten der Zuluft (38) in eine Mischkammer (40);
Mischen der Zuluft (38) in der Mischkammer (40) bis eine ausgewählte Temperatur der Zuluft (38) erreicht ist,
Verbessern des Mischens der Zuluft (38) in der Mischkammer (40) über einen Ventilator (48),
Leiten der Zuluft (38) durch einen Kühlsystemauslass (30) und in einen Innenraum eines Frachtcontainers (10),
Leiten eines Stroms von Abluft aus dem Frachtcontainer (10) in die Mischkammer (40); und
Mischen der Abluft und der Zuluft (38) in der Mischkammer (40),
wobei der Strom von Abluft die Kühleinheit (14) umgeht,
Leiten des Stroms von Abluft in die Mischkammer (40), wenn ein Verdichter (16) der Kühleinheit (14) betrieben wird,
**dadurch gekennzeichnet, dass** das Verfahren ferner die folgenden Schritte umfasst:
Stoppen des Stroms von Abluft in die Mischkammer (40), wenn der Verdichter (16) der Kühleinheit (14) nicht betrieben wird;
Halten der Zuluft (38) in der Mischkammer (40) über eine bewegliche Schließeinrichtung (42), um das Mischen der Zuluft (38) zu erleichtern;
wobei die bewegliche Schließeinrichtung (42) für mindestens einen Ein/Aus-Zyklus eines Verdichters (16) des Kühlsystems geschlossen bleibt; und
Erfassen einer Temperatur der Zuluft (38) in der Mischkammer (40) über einen Temperatursensor (44).

## Revendications

1. Système de réfrigération pour un conteneur de fret réfrigéré comprenant :
une unité de réfrigération (14) pour fournir un écoulement de sortie d'air (38) pour un conteneur de fret réfrigéré (10) ;
une sortie de système de réfrigération (30) pour permettre l'écoulement de la sortie d'air (38) dans le conteneur de fret (10) ;
une chambre de mélange (40) disposée entre l'unité de réfrigération (14) et la sortie de système de réfrigération (30) pour mélanger l'écoulement de sortie d'air (38) et réduire ainsi la fluctuation de température de sortie d'air au niveau de la sortie de système de réfrigération (30), et
un ventilateur (48) disposé dans la chambre de mélange (40) pour améliorer le mélange de la sortie d'air (38), dans lequel un écoulement d'air de retour provenant du conteneur de fret (10) est dirigé dans la chambre de mélange (40) pour se mélanger à la sortie d'air (38),
dans lequel l'écoulement d'air de retour contourne l'unité de réfrigération (14), et
dans lequel l'écoulement d'air de retour est dirigé dans la chambre de mélange (40) lorsqu'un compresseur (16) de l'unité de réfrigération (14) est en fonctionnement,
**caractérisé en ce que**
l'écoulement d'air de retour n'est pas dirigé dans la chambre de mélange (40) lorsque le compresseur (16) de l'unité de réfrigération (14) n'est pas en fonctionnement ;
la sortie de système de réfrigération (30) inclut une fermeture mobile (42) pour retenir l'écoulement de sortie d'air (38) dans la chambre de mélange (40) afin d'améliorer le mélange ;
la fermeture mobile (42) reste fermée pendant au moins un cycle marche/arrêt d'un compresseur (16) du système de réfrigération ; et
le système de réfrigération comprend en outre un capteur de température (44) disposé dans la chambre de mélange (40).

2. Procédé de fonctionnement d'un système de réfrigération pour un conteneur de fret réfrigéré (10) comprenant :
l'écoulement de sortie d'air (38) à travers une unité de réfrigération (14), réduisant ainsi la température de l'écoulement de sortie d'air (38) ;
la direction de la sortie d'air (38) dans une chambre de mélange (40) ;
le mélange de la sortie d'air (38) dans la chambre de mélange (40) jusqu'à ce que la température choisie de la sortie d'air (38) soit atteinte,
l'amélioration du mélange de la sortie d'air (38) dans la chambre de mélange (40) par l'intermédiaire d'un ventilateur (48) ;
la direction de la sortie d'air (38) à travers une sortie de système de réfrigération (30) et à l'intérieur d'un conteneur de fret (10), la direction d'un écoulement d'air de retour à partir du conteneur de fret (10) dans la chambre de mélange (40) ; et
le mélange de l'air de retour et de la sortie d'air (38) dans la chambre de mélange (40),
dans lequel l'écoulement d'air de retour contourne l'unité de réfrigération (14),
la direction de l'écoulement d'air de retour dans la chambre de mélange (40) lorsqu'un compresseur (16) de l'unité de réfrigération (14) est en fonctionnement,
**caractérisé en ce que** le procédé comprend en outre les étapes de :
arrêt de l'écoulement d'air de retour dans la chambre de mélange (40) lorsque le compresseur (16) de l'unité de réfrigération (14) n'est pas en fonctionnement ;
retenue de la sortie d'air (38) dans la chambre de mélange (40) par l'intermédiaire d'une fermeture mobile (42) pour faciliter le mélange de la sortie d'air (38) ;
dans lequel la fermeture mobile (42) reste fermée pendant au moins un cycle marche/arrêt d'un compresseur (16) du système de réfrigération ; et
détection d'une température de sortie d'air (38) dans la chambre de mélange (40) par l'intermédiaire d'un capteur de température (44) .
